# EUROPÄISCHE PATENTSCHRIFT

(11) **EP 4 021 778 B1**
(45) Veröffentlichungstag und Bekanntmachung des Hinweises auf die Patenterteilung: **19.07.2023**
(21) Anmeldenummer: 20750249.3
(22) Anmeldetag: 31.07.2020
(51) Int. Cl.: B61L 23/04, B61L 25/02, B61K 9/08

(54) **VERFAHREN UND MESSFAHRZEUG ZUR ERMITTLUNG EINER IST-LAGE EINES GLEISES**
METHOD AND MEASURING VEHICLE FOR DETERMINING AN ACTUAL POSITION OF A TRACK
PROCÉDÉ ET VÉHICULE DE MESURE POUR DÉTERMINER UNE POSITION RÉELLE D'UNE VOIE FERRÉE

(30) Priorität: 29.08.2019 AT 2842019
(43) Veröffentlichungstag der Anmeldung: 06.07.2022
(73) Patentinhaber: Track Machines Connected Gesellschaft m.b.H., 4020 Linz (AT)
(72) Erfinder: AUER, Florian, 1010 Wien (AT); BUCHBAUER, David, 3261 Steinakirchen am Forst (AT); BÜRGER, Martin, 4030 Linz (AT); METZGER, Bernhard, Virginia Beach, Virginia 23464 (US); HINTERBERGER, Fabian, 4040 Linz (AT)
(74) Vertreter: Burgstaller, Peter
(86) Internationale Anmeldenummer: PCT/EP2020/071628
(87) Internationale Veröffentlichungsnummer: WO 2021/037476

(56) Entgegenhaltungen:
- WO-A1-2019/029916
- AT-A1- 518 579

## Beschreibung

### Technisches Gebiet

Die Erfindung betrifft ein Verfahren zur Ermittlung einer Ist-Lage eines Gleises mittels eines auf dem Gleis fahrbaren Messfahrzeugs, wobei mittels eines am Messfahrzeug angeordneten berührungslosen Erfassungssystems in einer seitlichen Umgebung des Gleises positionierte Referenzpunkte automatisiert erfasst und deren jeweilige Ist-Distanz zum Gleis bestimmt wird. Zudem betrifft die Erfindung ein Messfahrzeug zur Durchführung des Verfahrens.

### Stand der Technik

Bei einem Schottergleis wird durch Befahren und durch Witterungseinflüsse ein im Schotterbett gelagerter Gleisrost in seiner örtlichen Lage beeinflusst. Zur Überprüfung einer aktuellen Ist-Lage des Gleises und insbesondere vor Instandsetzungsarbeiten erfolgen deshalb regelmäßig Messungen mittels eines eigens dafür vorgesehenen Messwagens. Auch eine entsprechend ausgestattete Gleisbaumaschine kann als Messwagen zum Einsatz kommen.

Bekannte Messmethoden nutzen neben dem Gleis befindliche Referenzpunkte, die an fixen Einrichtungen wie Elektromasten angebracht sind. Solche Referenzpunkte werden auch als Festpunkte oder Fixpunkte bezeichnet. In der Regel ist ein Referenzpunkt als Spitze eines Vermarkungsbolzens festgelegt. Die vorgesehene Lage jedes Referenzpunktes zum Gleis ist in Verzeichnissen dokumentiert. Damit ist für das Gleis eine Soll-Lage bestimmt, insbesondere für Kreis- und Übergangsbögen sowie Neigungsbrüche. Oft werden zwischen Hauptpunkten auch Zwischenreferenzpunkte angeordnet.

Aus der AT 518579 A1 sind ein Verfahren und ein Messfahrzeug bekannt, um Referenzpunkte automatisch zu erfassen und deren Lage zu ermitteln. Dazu ist ein Stereokamerasystem vorgesehen, das laufend Bildpaare der seitlichen Umgebung des Gleises aufnimmt. Mittels Mustererkennung wird in einer Auswerteeinrichtung festgestellt, ob in einem der Bildpaare ein Referenzpunkt abgebildet ist. In einem weiteren Schritt wird für einen gefundenen Referenzpunkt durch Auswertung der Disparität dessen Lage bestimmt. Zur laufenden Lageermittlung des Messfahrzeugs ist zudem eine Inertialmesseinheit angeordnet.

### Darstellung der Erfindung

Der Erfindung liegt die Aufgabe zugrunde, das eingangs genannte Verfahren dahingehend zu verbessern, dass auf einfache Weise Gleislagekorrekturen ermittelt werden können. Zudem soll ein Messfahrzeug zur Durchführung des verbesserten Verfahrens angegeben werden.

Erfindungsgemäß werden diese Aufgaben gelöst durch die Merkmale der unabhängigen Ansprüche 1 und 10. Abhängige Ansprüche geben vorteilhafte Ausgestaltungen der Erfindung an.

Dabei wird mittels eines auf dem Messfahrzeug angeordneten Inertialmesssystems eine dreidimensionale Trajektorie des Gleises erfasst, wobei mittels einer Rechnereinheit die Trajektorie in Trajektorienabschnitte mit jeweils einem auf einen ersten Referenzpunkt bezogenen Abschnittsanfangspunkt und einem auf einen zweiten Referenzpunkt bezogenen Abschnittsendpunkt unterteilt wird, wobei für jeden Trajektorienabschnitt bezüglich der zugeordneten Referenzpunkte eine virtuelle Langsehne festgelegt wird und wobei für jeden Trajektorienabschnitt Ist-Abstände zwischen der Trajektorie und der jeweils festgelegten Langsehne berechnet werden. Auf diese Weise werden eine automatisierte Referenzpunktbestimmung und eine Trajektorienerfassung des Gleises vorteilhaft kombiniert.

Die Trajektorie repräsentiert den Verlauf der Gleisachse oder den Verlauf einer Fahrkante einer Schiene. Die ermittelten Ist-Abstände der Trajektorienabschnitte zur jeweiligen Langsehne erlauben eine einfache Auswertung von Lagefehlern. Beispielsweise werden relative Lagefehler ausgewertet, indem ein Abgleich mit einer vorgegebenen Geometrie (z.B. Gerade, Kreisbogen, Übergangsbogen) des Gleisverlaufes erfolgt. In einer bevorzugten Variante erfolgt ein Abgleich mit einer vorgegebenen Soll-Lage des Gleises. Jedenfalls erlaubt das Verfahren eine genaue Korrektur der Gleislage gegenüber den erfassten Referenzpunkten. Dabei gelten die Ist-Abstände als sogenannte Pfeilhöhen, mittels derer im Gleisbau üblicherweise Krümmungen des Gleises bestimmt und insbesondere vorgegeben werden.

Eine weitere Vereinfachung der Auswertung von Lagefehlern wird erreicht, wenn die Ist-Abstände in einem der jeweiligen Langsehne zugeordneten lokalen Koordinatensystem berechnet werden. Dazu wird auch der entsprechende Trajektorienabschnitt in dieses lokale Koordinatensystem transformiert. Der Ursprung des lokalen Koordinatensystems liegt günstigerweise in einem Nullpunkt der Langsehne, wobei eine Achse des Koordinatensystems in Richtung der Langsehne zeigt. Auf diese Weise ergeben sich die Ist-Abstände zum Trajektorienabschnitt als Vektoren in dem lokalen Koordinatensystem.

Vorteilhafterweise werden für die Ist-Abstände ein horizontaler Vektor und ein vertikaler Vektor berechnet. Aus den vertikalen Vektoren der Ist-Abstände sind unmittelbar Werte für eine Nivellierung des Gleises ableitbar. Für ein seitliches Richten des Gleises bilden die horizontalen Vektoren der Ist-Abstände eine Datenbasis.

Eine weitere Verbesserung des Verfahrens zeichnet sich dadurch aus, dass ein Soll-Verlauf des Gleises vorgegeben wird, das die Ist-Abstände mit zugeordneten Soll-Abständen zwischen dem Soll-Verlauf und der jeweiligen Langsehne verglichen werden und dass daraus Korrekturwerte für eine nachfolgende Gleisbearbeitung abgeleitet werden. Diese Korrekturwerte stehen in weiterer Folge für die Steuerung einer Gleisbaumaschine zur Verfügung, um das Gleis in die vorgegebene Soll-Lage zu bringen.

Dabei ist es günstig, wenn bezüglich des jeweiligen Referenzpunktes eine horizontale Soll-Distanz und/oder eine vertikale Soll-Distanz des Gleises vorgegeben wird, wobei die Korrekturwerte mit einer Differenz zwischen der erfassten Ist-Distanz und der zugeordneten Soll-Distanz abgeglichen werden. Auf diese Weise stehen modifizierte Korrekturwerte zur Verfügung, um das Gleis in eine referenzierte Soll-Lage zu bringen.

Zur Erhöhung der Genauigkeit und zur Vereinfachung der nachfolgenden Gleislagenkorrektur wird für eine linke Schiene des Gleises und für eine rechte Schiene des Gleises jeweils eine eigene dreidimensionale Trajektorie erfasst. Damit ergeben sich für jede Schiene eigene Ist-Abstande gegenüber der jeweiligen Langsehne, um daraus schienenabhängige Vorgaben für eine Gleislagenkorrektur abzuleiten. Insbesondere Überhöhungsfehler des Gleises oder Einzelfehler mit unterschiedlichen Absenkungen der jeweiligen Schiene sind auf diese Weise einfach erfassbar.

Eine weitere Verbesserung des Verfahrens sieht vor, dass mittels einer GNSS-Empfangseinrichtung GNSS-Positionen des Messfahrzeugs erfasst werden und dass die erfasste Ist-Lage des Gleises mit den GNSS-Positionen abgeglichen wird. Mittels der GNSS-Positionen wird eine georeferenzierte Geometrie des Gleises bestimmt, wodurch die gewonnenen Daten ohne weitere Transformation in übergeordneten Systemen verwertbar sind.

Für eine effiziente Verarbeitung der Messergebnisse ist es von Vorteil, wenn mittels des Inertialmesssystems für jedes Messdatum ein Zeitstempel als gemeinsame Zeitbasis vorgegeben wird. Auf diese Weise sind die Messergebnisse des Inertialmesssystems, des berührungslosen Referenzpunkte-Erfassungssystems und gegebenenfalls der GNSS-Empfangseinrichtung problemlos kombinierbar.

In einer weiteren Ausprägung des Verfahrens werden geometrische Beziehungen der Anordnungen des Inertialmesssystems und des berührungslosen Referenzpunkte-Erfassungssystems sowie gegebenenfalls einer GNSS-Empfangseinrichtung mittels eines Kalibriervorgangs bestimmt. Das ist vor allem dann sinnvoll, wenn die beiden Systeme nicht starr auf einer gemeinsamen Messplattform angeordnet sind.

Das erfindungsgemäße Messfahrzeug umfasst einen Fahrzeugrahmen, der auf Schienenfahrwerken auf einem Gleis verfahrbar ist, wobei am Messfahrzeug ein berührungsloses Erfassungssystem zum automatischen Erfassen von in einer seitlichen Umgebung des Gleises positionierten Referenzpunkten sowie eine Inertialmesseinheit angeordnet sind. Dabei ist ein die Inertialmesseinheit umfassendes Inertialmesssystem zur Erfassung einer dreidimensionalen Trajektorie des Gleises eingerichtet, wobei das berührungslose Erfassungssystem und das Inertialmesssystem mit einer Rechnereinheit gekoppelt sind und wobei die Rechnereinheit dazu eingerichtet ist, die Trajektorie in Trajektorienabschnitte mit jeweils einem auf einen ersten Referenzpunkt bezogenen Abschnittsanfangspunkt und einem auf einen zweiten Referenzpunkt bezogenen Abschnittsendpunkt zu unterteilen, für jeden Trajektorienabschnitt bezüglich der zugeordneten Referenzpunkte eine virtuelle Langsehne festzulegen und für jeden Trajektorienabschnitt Ist-Abstände zwischen der Trajektorie und der jeweils festgelegten Langsehne zu berechnet.

Damit ist ein Fahrzeug angegeben, mit dem das beschriebene Verfahren auf einfache Weise durchführbar ist. Konkret werden mittels des Messfahrzeugs während einer Messfahrt zunächst die Referenzpunkte und die Trajektorie des Gleises automatisiert erfasst und abgespeichert. Auf diese Referenzpunkt-bezogenen Geometriedaten des Gleises greift die Rechnereinheit zu, um die Trajektorie zu unterteilen, jeweilige Langsehnen festzulegen und die Abstände zwischen den Trajektorienabschnitten und der zugeordneten Langsehne zu berechnen.

Dabei ist es von Vorteil, wenn das berührungslose Erfassungssystem ein Stereokamerasystem zur Aufnahme von Bildpaaren der seitlichen Umgebung des Gleises und eine Auswerteeinrichtung zur Erfassung und Lagebestimmung der Referenzpunkte umfasst. Ein solches System liefert bei geringer Fehleranfälligkeit sehr genaue Ergebnisse.

In einer Weiterbildung ist mit dem Fahrzeugrahmen eine GNSS-Empfangseinrichtung verbunden, wobei am Fahrzeugrahmen Lagemesseinrichtungen zur Bestimmung der Lage des Fahrzeugrahmens gegenüber dem Gleis angeordnet sind. Mittels der Lagemesseinrichtungen wird jede Relativbewegung des Fahrzeugrahmens gegenüber dem Gleis erfasst. Eine laufende rechnerische Kompensation dieser Relativbewegungen ergibt präzise GNSS-Positionen des Messfahrzeugs mit einem genauen Bezug zur Gleislage. Als Ergebnis liegen abgespeicherten GNSS-Positionsdaten vor, die in weiterer Folgen mittels der Rechnereinheit mit den erfassten Referenzpunkt-bezogenen Geometriedaten des Gleises abgeglichen werden.

### Kurze Beschreibung der Zeichnungen

Die Erfindung wird nachfolgend in beispielhafter Weise unter Bezugnahme auf die beigefügten Figuren erläutert. Es zeigen in schematischer Darstellung:
- Fig. 1: Messfahrzeug auf einem Gleis neben einem Referenzpunkt
- Fig. 2: Trajektorie eines Gleises
- Fig. 3: Draufsicht auf Trajektorienabschnitte mit zugeordneten Langsehnen und Ist-Abständen
- Fig. 4: Detailansicht zu Fig. 3
- Fig. 5: Seitenansicht einer Trajektorie mit zugeordneter Langsehne
- Fig. 6: Blockschaltbild und Datenverarbeitung
- Fig. 7: Erfassung einer georeferenzierten Trajektorie
- Fig. 8: Blockschaltbild einer alternativen Auswertelogik

### Beschreibung der Ausführungsformen

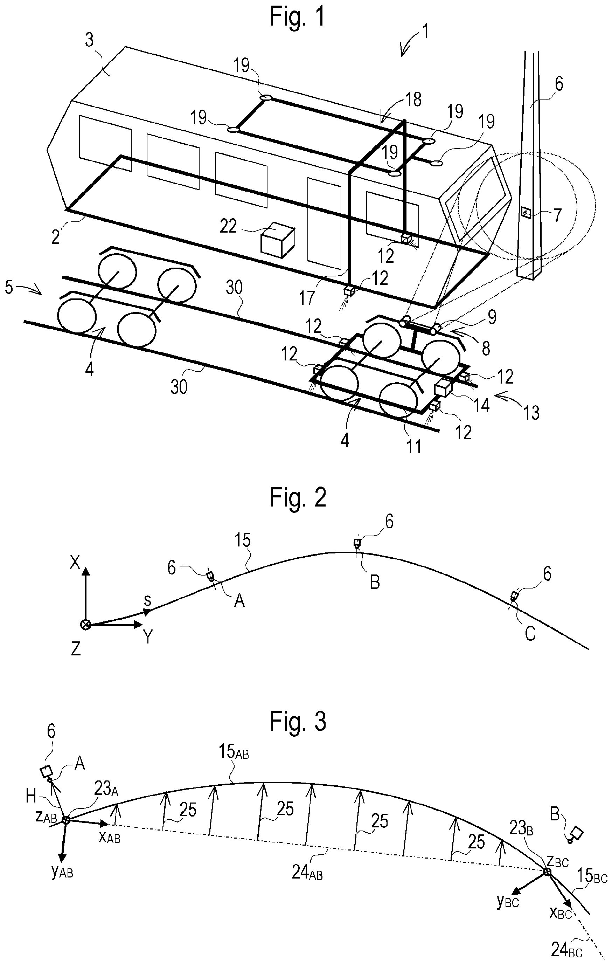

Fig. 1 zeigt ein Messfahrzeug 1 mit einem Fahrzeugrahmen 2, auf dem ein Wagenkasten 3 aufgebaut ist. Das Messfahrzeug 1 ist mittels Schienenfahrwerke 4 auf einem Gleis 5 verfahrbar. Zur besseren Veranschaulichung ist der Fahrzeugrahmen 2 samt Wagenkasten 3 von den Schienenfahrwerken 4 abgehoben dargestellt. In einer seitlichen Umgebung des Gleises 5 befindet sich ein Mast 6 mit einem Vermarkungsbolzen 7. Die Spitze des Vermarkungsbolzens 7 definiert einen Referenzpunkt A, B, C für die Lagebestimmung des Gleises 5. Auch andere Vermarkungsobjekte können einen Referenzpunkt A, B, C definieren, beispielsweise ein Marker mit aufgedruckten Linien oder Farbflächen. Zudem können eindeutige Kennzeichen wie ein Strichcode oder eine Buchstaben-Nummern-Folge den Referenzpunkt A, B, C charakterisieren.

Die Schienenfahrwerke 4 sind vorzugsweise als Drehgestelle ausgebildet. Am vorderen Drehgestell ist ein berührungsloses Erfassungssystem 8 zum automatisierten Erfassen des jeweiligen Referenzpunktes A, B, C angeordnet. Während einer Messfahrt werden mittels eines Stereokamerasystems 9 laufend Bildpaare aufgenommen und mittels einer Auswerteeinrichtung 10 ausgewertet. Sobald in einem der Bildpaare ein Vermarkungsbolzen 7 oder sonstiger Referenzpunktmarker mittels Mustererkennung erkannt wird, erfolgt eine Lagebestimmung des entsprechenden Referenzpunktes A, B, C. Beispielsweise werden Ist-Distanzen H, V des jeweiligen Referenzpunktes A, B, C zum Gleis 5 in horizontaler Richtung und in vertikaler Richtung bestimmt, wobei auch die jeweiligen Positionen in Gleislängsrichtung s registriert werden.

Günstigerweise ist das Erfassungssystem 8 auf einem Messrahmen 11 angeordnet. Der Messrahmen 11 ist mit den Radachsen des Drehgestells verbunden, sodass Bewegungen der Räder ohne Federwirkung auf den Messrahmen 11 übertragen werden. Gegenüber dem Gleis ergeben sich somit lediglich Seitwärts- bzw. Pendelbewegungen des Messrahmens 11. Diese Bewegungen werden mittels am Messrahmen 11 angeordneter Lagemesseinrichtungen 12 erfasst. Diese sind beispielsweise als Laserlinienschnittsensoren ausgebildet.

Neben der Lagebestimmung des Erfassungssystems 8 gegenüber dem Gleis 5 dienen diese Lagemesseinrichtungen 12 auch als Komponenten eines am Messrahmen 11 aufgebauten Inertialmesssystems 13. Dieses umfasst als zentrales Element eine Inertialmesseinheit 14. Mit der Inertialmesseinheit 14 wird während einer Messfahrt eine Trajektorie 15 des Gleises 5 erfasst, wobei Relativbewegungen der Inertialmesseinheit 14 gegenüber dem Gleis mittels der Daten der Lagemesseinrichtungen 12 kompensiert werden. Zudem umfasst das Inertialmesssystem 13 einen Navigationsprozessor 16, der eine für eine nachfolgende Aufwertung korrigierte Trajektorie 15 des Gleises 5 ausgibt.

Mit dem Fahrzeugrahmen 2 starr verbunden ist ein Träger 17 einer GNSS-Empfangseinrichtung 18. Diese umfasst mehrere zueinander eingerichtete GNSS-Antennen 19 für eine genaue Erfassung von GNSS-Positionen 20 des Messfahrzeugs 1. Um Pendelbewegungen des Fahrzeugrahmens 2 gegenüber dem Gleis 5 zu erfassen, sind am Fahrzeugrahmen 2 weitere Lagemesseinrichtungen 12 angeordnet. Auch hier kommen beispielsweise Laserlinienschnittsensoren zum Einsatz. Dabei erfolgt mittels eines Systemprozessors 21 eine gemeinsame Auswertung der von den GNSS-Antennen 19 empfangenen Signale und eine Kompensation der Relativbewegungen gegenüber dem Gleis 5.

Sinnvollerweise erfolgt vor einer Messfahrt eine Kalibrierung der geometrischen Beziehungen der Messsysteme 8, 13, 18. Dabei wird die Position und Orientierung des Referenzpunkte-Erfassungssystems 8 und der GNSS-Antennen 19 gegenüber dem Messrahmen 11 des Drehgestells bestimmt. Position und Orientierung der Inertialmesseinheit 14 sind durch die Konstruktion des Messrahmens 11 bekannt. Resultat der Kalibrierung ist eine Verschiebung und Verdrehung des Referenzpunkte-Erfassungssystems 8 relativ zur Inertialmesseinheit 14.

In Fig. 2 ist die bei einer Messfahrt erfasste Trajektorie 15 des Gleises 5 dargestellt. Dabei werden die Koordinaten der Trajektorie 15 mittels einer im Messfahrzeug 1 angeordneten Rechnereinheit 22 in ein lokales Horizontsystem XYZ übergeführt. Dieses Koordinatensystem XYZ hat seinen Ursprung im Startpunkt der Trajektorie 15. Die X-Achse zeigt Richtung Norden, die Y-Achse Richtung Osten und die Z-Achse nach unten. Mittels des Referenzpunkte-Erfassungssystems 8 werden zudem die Referenzpunkte A, B, C erfasst, die sich entlang der Messstrecke befinden. Auf diese Weise wird eine Referenzpunkte-bezogene Gleisgeometrie der Messstrecke erfasst und in einer mit der Rechnereinheit 22 gekoppelten Speichereinheit abgespeichert.

In einem nächsten Verfahrensschritt wird die erfasste und abgespeicherte Trajektorie 15 mittels der Rechnereinheit 22 in Trajektorienabschnitte 15_{AB}, 15_{BC} unterteilt, wie in Fig. 3 dargestellt. Dabei sind ein jeweiliger Abschnittsanfangspunkt auf einen ersten Referenzpunkt A bzw. B und ein jeweiliger Abschnittsendpunkt auf einen zweiten Referenzpunkt B bzw. C bezogen. Beispielsweise erfolgt jeweils eine Festlegung des Abschnittsanfangspunktes und des Abschnittsendpunktes in einer normal zur Trajektorie 15 ausgerichteten Bezugsebene, in welcher der zugeordnete Referenzpunkt A, B, C liegt. Günstigerweise liegen in diesen Bezugsebenen auch Gleisanschlusspunkte 23_{A}, 23_{B}, die eine referenzierte Soll-Lage 27' des Gleises 5 gegenüber den Referenzpunkten A, B, C bestimmen.

Zudem wird für jeden Trajektorienabschnitte 15_{AB}, 15_{BC} mittels der Rechnereinheit 22 eine virtuelle Langsehne 24_{AB}, 24_{BC} festgelegt. Ein Anfangspunkt der jeweiligen Langsehne 24_{AB}, 24_{BC} bildet dabei einen Ursprung eines zugeordneten lokalen Koordinatensystems x_{AB} y_{AB} z_{AB} bzw. x_{BC} y_{BC} z_{BC}. Die jeweilige x-Achse x_{AB}, x_{BC} ist in Richtung der zugeordneten Langsehne 24_{AB}, 24_{BC} ausgerichtet. Die jeweilige y-Achse y_{AB}, y_{BC} verläuft waagrecht und die z-Achse z_{AB}, z_{BC} weist nach unten. Vorteilhafterweise stimmt der Anfangspunkt der jeweiligen Langsehne 24_{AB}, 24_{BC} mit dem Abschnittsanfangspunkt des zugeordneten Trajektorienabschnittes 15_{AB}, 15_{BC} überein, wie in Fig. 3 dargestellt.

Mit dieser geometrischen Festlegung berechnet die Rechnereinheit 22 für jeden Trajektorienabschnitt 15_{AB}, 15_{AB} kontinuierlich oder in vorgegebenen Intervallen Ist-Abstände 25 zwischen der Trajektorie 15 und der jeweils zugeordneten Langsehne 24_{AB}, 24_{BC}. Diese errechneten Ist-Abstände 25 werden auch als Pfeilhöhen bezeichnet und bilden eine Datenbasis für eine nachfolgende Berechnung einer Gleislagenkorrektur. Dabei erfolgt eine Vorgabe von Soll-Abständen 26 mit Bezugnahme auf einen Soll-Verlauf 27 des Gleises 5. Dieser Soll-Verlauf 27 ist zunächst eine Abfolge von vorgegebenen Gleisgeometrieabschnitten wie Geraden, Kreisbögen und Übergangsbögen. Mit bekannten Soll-Distanzwerten H', V' der Anschlusspunkte 23_{A}, 23_{B} gegenüber den Referenzpunkten A, B, C ist zudem die referenzierte Soll-Lage 27' des Gleises 5 vorgebbar. In weiterer Folge kann es sinnvoll sein, mittels bekannter Koordinaten X_{A} Y_{A} Z_{A} der Referenzpunkte A, B, C eine absolute Gleisgeometrie 36 zu ermitteln.

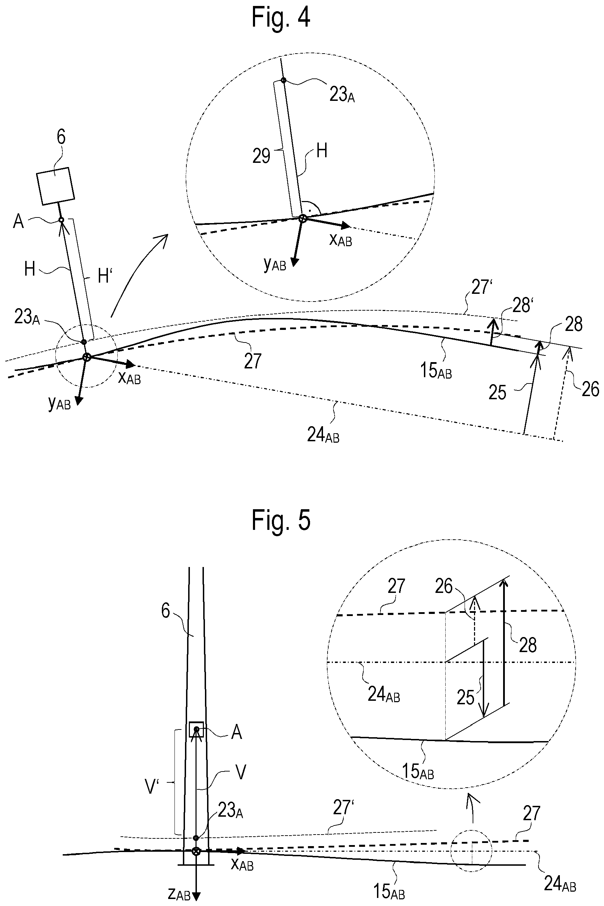

Die Figuren 4 und 5 zeigen die geometrischen Verhältnisse im Bereich eines Referenzpunktes A in einer Draufsicht und in einer Seitenansicht. Entsprechend sind die Abstände 25, 26 in Fig. 4 als horizontale Vektoren und in Fig. 5 als vertikale Vektoren angegebenen. Zur Berechnung von Korrekturwerten 28 dienen die Langsehne 24_{AB}, der Trajektorienabschnitt 15_{AB} und der Soll-Verlauf 27 des Gleises 5. Bezugssystem ist dabei das zugeordnete lokale Koordinatensystem x_{AB} y_{AB} z_{AB}.

Der sich an einer jeweiligen Stelle des Gleises 5 ergebende Ist-Abstand 25 wird mit dem Soll-Abstand 26 verglichen, um daraus einen Korrekturwert 28 abzuleiten. Die Korrekturwerte 28 können auch direkt aus den Ist-Abständen 25 (Ist-Pfeilhöhen) und einer vorgegebenen Gleisgeometrie (Bogenkrümmung) abgeleitet werden. Konkret ergibt sich in Fig. 4 ein Korrekturwert 28 zur seitlichen Verschiebung des Gleises 5 und in Fig. 5 ergibt sich ein Korrekturwert 28 zum Anheben des Gleises 5.

Aus einem Verzeichnis der Referenzpunkte A, B, C (z.B. Kilometrierung in Gleislängsrichtung s) sind die horizontale Soll-Distanz H' und die vertikale Soll-Distanz V' zwischen dem jeweiligen Referenzpunkt A, B, C und dem zugeordneten Anschlusspunkt 23_{A} des Gleises 5 bekannt. Zudem sind die während einer Messfahrt mittels des berührungslosen Erfassungssystems 8 erfassten Ist-Distanzen H, V zwischen der Ist-Lage des Gleises 5 und dem jeweiligen Referenzpunkt A, B, C bekannt. Diese Ist-Distanzen werden vorzugsweise als normal zum Gleisvorlauf ausgerichtete Vektoren H, V bestimmt.

In weiterer Folge wird aus den bekannten Soll-Distanzen H', V' und den erfassten Ist-Distanzen H, V eine jeweilige Differenz 29 gebildet. Mit der jeweiligen Differenz 29 werden die Korrekturwerte 28 abgestimmt, um bei einer nachfolgenden Gleisbearbeitung eine bezüglich der Referenzpunkte A, B, C referenzierte Soll-Lage 27' des Gleises 5 zu erhalten. Beispielsweise wird die für den jeweiligen Trajektorienabschnitt 15_{AB} relevante Differenz 29 zwischen Soll-Distanz H', V' und Ist-Distanz H, V gleichmäßig auf die Korrekturwerte 28 aufgebracht, um modifizierte Korrekturwerte 28' zu erhalten.

Vorteilhafterweise erfolgt dieser Berechnungsvorgang für beide Schienen 30 des Gleises 5 separat. Dabei wird als jeweilige Trajektorie 15 die Fahrkante der zugeordneten Schiene 30 erfasst und mit einer Soll-Lage der Schiene 30 verglichen.

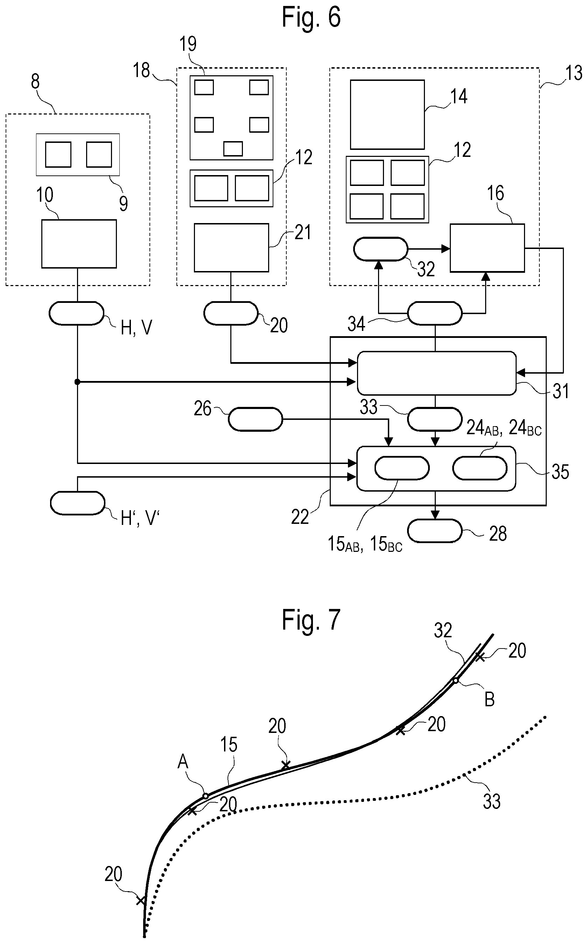

Ein beispielhaftes Schema der beteiligten Systeme ist in Fig. 6 angegeben. In der Rechnereinheit 22 ist ein Integrations-Algorithmus 31 eingerichtet, mittels dem die Messergebnisse der Messsysteme 8, 13, 18 verknüpft werden. Basis für die Integration der referenzierten Gleisgeometrie bilden die Koordinaten der Referenzpunkte A, B, C. Auch die GNSS-Positionen 20 fließen in den Integrationsvorgang ein, sodass als Resultat die Trajektorie 15 mit präzisen GNSS-Koordinaten vorliegt (georeferenzierte Gleisgeometrie). Dabei ist darauf zu achten, dass alle Koordinaten auf ein gemeinsames Koordinatensystem XYZ bezogen sind.

Das Inertialmesssystem 13 bestimmt zunächst korrigierte Messdaten 32 der Inertialmesseinheit 14. Diese Daten sind dem Navigationsprozessor 16 zugeführt und ergeben eine vorläufige Trajektorie 15. Mittels des Integrations-Algorithmus 31 wird daraus ein relativer Verlauf 33 des Gleises 5 (relative Gleisgeometrie) berechnet.

Der Navigationsprozessor 16 arbeitet nach den bekannten Prinzipien der inertialen Navigation und berechnet unbekannte Parameter, die jeweilige Position, die jeweilige Geschwindigkeit und die jeweilige Orientierung mit Hilfe eines Kalman-Filters. Dabei werden neben der Bestimmung der unbekannten Parameter auch etwaige Sensorungenauigkeiten der Inertialmesseinheit 14 abgeschätzt. Entsprechende Korrekturdaten 34 werden zur Korrektur der Messergebnisse der Inertialmesseinheit 14 verwendet.

Ein Auswertealgorithmus 35 unterteilt die Trajektorie 15 bezüglich der erfassten Referenzpunkte A, B, C in die Trajektorienabschnitte 15_{AB}, 15_{BC} und ordnet die jeweilige Langsehne 24_{AB}, 24_{BC} zu. Durch einen Vergleich der errechneten Ist-Abstände 25 mit den Soll-Abständen 26 ergeben sich die Korrekturwerte 28 für ein Nivellieren und Richten des Gleises 5.

In Fig. 7 sind die Ergebnisse der Messungen, der Korrekturen und der Datenverknüpfungen veranschaulicht. Während einer Messfahrt erfolgt zunächst die Erfassung der Messdaten 32 mittels des Inertialmesssystems 13. Zudem werden Koordinaten der Referenzpunkte A, B, C und GNSS-Positionen 20 erfasst. Die endgültig richtige Lage der dreidimensionale Trajektorie 15 resultiert aus der Georeferenzierung.

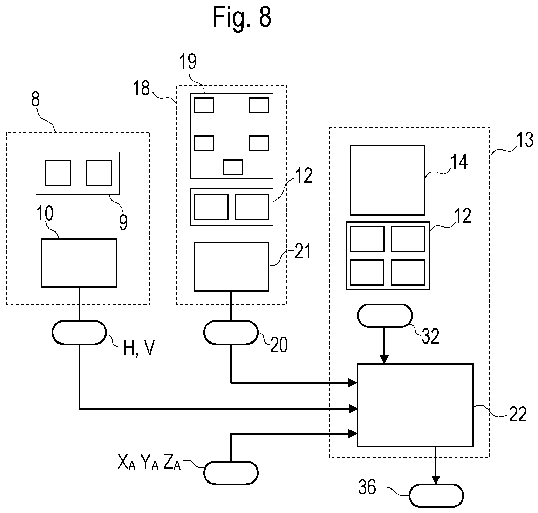

Das in Fig. 8 dargestellte Schema wird zur Bestimmung einer absoluten Gleisgeometrie 36 genutzt. Dabei werden mittels der Rechnereinheit 22 die Messergebnisse der einzelnen Messsysteme 8, 18, 13 mit den Koordinaten X_{A} Y_{A} Z_{A} der Referenzpunkte A, B, C unter Nutzung eines Kalman Filters abgeglichen.

## Patentansprüche

1. Verfahren zur Ermittlung einer Ist-Lage eines Gleises (5) mittels eines auf dem Gleis (5) fahrbaren Messfahrzeugs (1), wobei mittels eines am Messfahrzeug (1) angeordneten berührungslosen Erfassungssystems (8) in einer seitlichen Umgebung des Gleises (5) positionierte Referenzpunkte (A, B, C) automatisiert erfasst und deren jeweilige Ist-Distanz (H, V) zum Gleis (5) bestimmt wird, **dadurch gekennzeichnet, dass** mittels eines auf dem Messfahrzeug (1) angeordneten Inertialmesssystems (13) eine dreidimensionale Trajektorie (15) des Gleises (5) erfasst wird, dass mittels einer Rechnereinheit (22) die Trajektorie (15) in Trajektorienabschnitte (15_{AB}, 15_{BC}) mit jeweils einem auf einen ersten Referenzpunkt (A, B) bezogenen Abschnittsanfangspunkt und einem auf einen zweiten Referenzpunkt (B, C) bezogenen Abschnittsendpunkt unterteilt wird, dass für jeden Trajektorienabschnitt (15_{AB}, 15_{BC}) bezüglich der zugeordneten Referenzpunkte (A, B, C) eine virtuelle Langsehne (24_{AB}, 24_{BC}) festgelegt wird und dass für jeden Trajektorienabschnitt (15_{AB}, 15_{BC}) Ist-Abstände (25) zwischen der Trajektorie (15) und der jeweils festgelegten Langsehne (24_{AB}, 24_{BC}) berechnet werden.

2. Verfahren nach Anspruch 1, **dadurch gekennzeichnet, dass** die Ist-Abstände (25) in einem der jeweiligen Langsehne (24_{AB}, 24_{BC}) zugeordneten lokalen Koordinatensystem (x_{AB} y_{AB} z_{AB}, x_{BC} y_{BC} z_{BC}) berechnet werden.

3. Verfahren nach Anspruch 1 oder 2, **dadurch gekennzeichnet, dass** für die Ist-Abstände (25) ein horizontaler Vektor und ein vertikaler Vektor berechnet werden.

4. Verfahren nach einem der Ansprüche 1 bis 3, **dadurch gekennzeichnet, dass** ein Soll-Verlauf (27) des Gleises (5) vorgegeben wird, das die Ist-Abstände (25) mit zugeordneten Soll-Abständen (26) zwischen dem Soll-Verlauf (27) und der jeweiligen Langsehne (24_{AB}, 24_{BC}) verglichen werden und dass daraus Korrekturwerte (28) für eine nachfolgende Gleisbearbeitung abgeleitet werden.

5. Verfahren nach Anspruch 4, **dadurch gekennzeichnet, dass** bezüglich des jeweiligen Referenzpunktes (A, B, C) eine horizontale Soll-Distanz (Hs) und/oder eine vertikale Soll-Distanz (Vs) des Gleises (5) vorgegeben wird und dass die Korrekturwerte (28) mit einer Differenz (29) zwischen der erfassten Ist-Distanz (H, V) und der zugeordneten Soll-Distanz (Hs, Vs) abgeglichen werden.

6. Verfahren nach einem der Ansprüche 1 bis 5, **dadurch gekennzeichnet, dass** für eine linke Schiene (30) des Gleises (5) und für eine rechte Schiene (30) des Gleises (5) jeweils eine eigene dreidimensionale Trajektorie (15) erfasst wird.

7. Verfahren nach einem der Ansprüche 1 bis 6, **dadurch gekennzeichnet, dass** mittels einer GNSS-Empfangseinrichtung (18) GNSS-Positionen (20) des Messfahrzeugs (1) erfasst werden und dass die erfasste Ist-Lage des Gleises (5) mit den GNSS-Positionen (20) abgeglichen wird.

8. Verfahren nach einem der Ansprüche 1 bis 7, **dadurch gekennzeichnet, dass** mittels des Inertialmesssystems (13) für jedes Messdatum ein Zeitstempel als gemeinsame Zeitbasis vorgegeben wird.

9. Verfahren nach einem der Ansprüche 1 bis 8, **dadurch gekennzeichnet, dass** geometrische Beziehungen der Anordnungen des Inertialmesssystems (13) und des berührungslosen Erfassungssystems (8) sowie gegebenenfalls einer GNSS-Empfangseinrichtung (18) mittels eines Kalibriervorgangs bestimmt werden.

10. Messfahrzeug (1) mit einem Fahrzeugrahmen (2), der auf Schienenfahrwerken (4) auf einem Gleis (5) verfahrbar ist, wobei am Messfahrzeug (1) ein berührungsloses Erfassungssystem (8) zum automatischen Erfassen von in einer seitlichen Umgebung des Gleises (5) positionierten Referenzpunkten (A, B, C) sowie eine Inertialmesseinheit (14) angeordnet sind, **dadurch gekennzeichnet, dass** ein die Inertialmesseinheit (14) umfassendes Inertialmesssystem (13) zur Erfassung einer dreidimensionalen Trajektorie (15) des Gleises (5) eingerichtet ist, dass das berührungslose Erfassungssystem (8) und das Inertialmesssystem (13) mit einer Rechnereinheit (22) gekoppelt sind und dass die Rechnereinheit (22) dazu eingerichtet ist, die Trajektorie (15) in Trajektorienabschnitte (15_{AB}, 15_{BC}) mit jeweils einem auf einen ersten Referenzpunkt (A, B) bezogenen Abschnittsanfangspunkt und einem auf einen zweiten Referenzpunkt (B, C) bezogenen Abschnittsendpunkt zu unterteilen, für jeden Trajektorienabschnitt (15_{AB}, 15_{BC}) bezüglich der zugeordneten Referenzpunkte (A, B, C) eine virtuelle Langsehne (24_{AB}, 24_{BC}) festzulegen und für jeden Trajektorienabschnitt (15_{AB}, 15_{BC}) Ist-Abstände (25) zwischen der Trajektorie (15) und der jeweils festgelegten Langsehne (24_{AB}, 24_{BC}) zu berechnet.

11. Messfahrzeug (1) nach Anspruch 10, **dadurch gekennzeichnet, dass** das berührungslose Erfassungssystem (8) ein Stereokamerasystem (9) zur Aufnahme von Bildpaaren der seitlichen Umgebung des Gleises (5) und eine Auswerteeinrichtung (10) zur Erfassung und Lagebestimmung der Referenzpunkte (A, B, C) umfasst.

12. Messfahrzeug (1) nach Anspruch 10 oder 11, **dadurch gekennzeichnet, dass** mit dem Fahrzeugrahmen (2) eine GNSS-Empfangseinrichtung (18) verbunden ist und dass am Fahrzeugrahmen (2) Lagemesseinrichtungen (12) zur Bestimmung der Lage des Fahrzeugrahmens (2) gegenüber dem Gleis (5) angeordnet sind.

## Claims

1. A method for determining an actual geometry of a track (5) by means of a track inspection vehicle (1) movable on the track (5), wherein, by means of a non-contacting recording system (8) arranged on the track inspection vehicle (1), reference points (A, B, C) positioned in a lateral environment of the track (5) are automatically recorded and their respective actual distance (H, V) from the track (5) is determined, **characterised in that** a three-dimensional trajectory (15) of the track (5) is recorded by means of an inertial measuring system (13) arranged on the track inspection vehicle (1), the trajectory (15) is subdivided by means of a computing unit (22) into trajectory sections (15_{AB}, 15_{BC}) each having a section starting point related to a first reference point (A, B) and a section end point related to a second reference point (B, C), for each trajectory section (15_{AB}, 15_{BC}), a virtual longitudinal chord (24_{AB}, 24_{BC}) is defined in relation to the assigned reference points (A, B, C), and actual distances (25) between the trajectory (15) and the respectively defined longitudinal chord (24_{AB}, 24_{BC}) are calculated for each trajectory section (15_{AB}, 15_{BC}).

2. A method according to claim 1, **characterised in that** the actual distances (25) are calculated in a local coordinate system (x_{AB} y_{AB} z_{AB}, x_{BC} y_{BC} z_{BC}) assigned to the respective longitudinal chord (24_{AB}, 24_{BC}).

3. A method according to claim 1 or 2, **characterised in that** a horizontal vector and a vertical vector are calculated for the actual distances (25).

4. A method according to one of the claims 1 to 3, **characterised in that** a target course (27) of the track (5) is predefined, the actual distances (25) are compared with assigned target distances (26) between the target course (27) and the respective longitudinal chord (24_{AB}, 24_{BC}), and that correction values (28) for a subsequent track maintenance are derived therefrom.

5. A method according to claim 4, **characterised in that** a horizontal target distance (Hs) and/or a vertical target distance (Vs) of the track (5) is predefined in relation to the respective reference point (A, B, C), and the correction values (28) are compared with a difference (29) between the recorded actual distance (H, V) and the associated target distance (Hs,Vs).

6. A method according to one of claims 1 to 5, **characterised in that** a separate three-dimensional trajectory (15) is recorded for a left rail (30) of the track (5) and for a right rail (30) of the track (5).

7. A method according to one of claims 1 to 6, **characterised in that** GNSS positions (20) of the track inspection vehicle (1) are recorded by means of a GNSS receiving device (18), and the recorded actual geometry of the track (5) is matched with the GNSS positions (20).

8. A method according to one of claims 1 to 7, **characterised in that** a time stamp is predefined as a common time base for each measuring date by means of the inertial measuring system (13).

9. A method according to one of claims 1 to 8, **characterised in that** geometric relationships of the arrays of the inertial measuring system (13) and the non-contacting recording system (8) and, if applicable, a GNSS receiving device (18) are determined by means of a calibration process.

10. A track inspection vehicle (1) having a vehicle frame (2) that is movable on rail-based running gears (4) on a track (5), wherein a non-contacting recording system (8) for automatically recording reference points (A, B, C) positioned in a lateral environment of the track (5) and an inertial measuring unit (14) are arranged on the track inspection vehicle (1), **characterised in that** an inertial measuring system (13) comprising the inertial measuring unit (14) is designed to record a three-dimensional trajectory (15) of the track (5), the non-contacting recording system (8) and the inertial measuring system (13) are coupled to a computing unit (22), and the computing unit (22) is designed to divide the trajectory (15) into trajectory sections (15_{AB}, 15_{BC}), each having a section starting point related to a first reference point (A, B) and a section end point related to a second reference point (B, C), to define a virtual longitudinal chord (24_{AB}, 24_{BC}) for each trajectory section (15_{AB}, 15_{BC}) in relation to the assigned reference points (A, B, C), and to calculate for each trajectory section (15_{AB}, 15_{BC}) actual distances (25) between the trajectory (15) and the respectively defined longitudinal chord (24_{AB}, 24_{BC}).

11. A track inspection vehicle (1) according to claim 10, **characterised in that** the non-contacting recording system (8) comprises a stereo camera system (9) for recording image pairs of the lateral environment of the track (5) and an evaluation device (10) for recording and determining the position of the reference points (A, B, C).

12. A track inspection vehicle (1) according to claim 10 or 11, **characterised in that** a GNSS receiving device (18) is connected to the vehicle frame (2) and position measuring devices (12) for determining the position of the vehicle frame (2) in relation to the track (5) are arranged on the vehicle frame (2).

## Revendications

1. Procédé pour déterminer une position réelle d'une voie ferrée (5) au moyen d'un véhicule de mesure (1) pouvant se déplacer sur la voie ferrée (5), des points de référence (A, B, C) en position latérale par rapport à la voie ferrée (5) étant détectés de manière automatisée au moyen d'un système de détection (8) sans contact disposé sur le véhicule de mesure (1) et leur distance réelle (H, V) respective par rapport à la voie ferrée (5) étant déterminée, **caractérisé en ce qu'**une trajectoire tridimensionnelle (15) de la voie ferrée (5) est détectée au moyen d'un système de mesure inertielle (13) disposé sur le véhicule de mesure (1), **en ce qu'**au moyen d'une unité de calcul (22), la trajectoire (15) est divisée en segments de trajectoire (15_{AB}, 15_{BC}) ayant chacun un point de début de segment associé à un premier point de référence (A, B) et un point de fin de segment associé à un deuxième point de référence (B, C), **en ce que** une longue corde virtuelle (24_{AB}, 24_{BC}) est définie pour chaque segment de trajectoire (15_{AB}, 15_{BC}) par rapport aux points de référence (A, B, C) associés, et **en ce que** des distances réelles (25) entre la trajectoire (15) et la longue corde (24_{AB}, 24_{BC}) respectivement définie sont calculées pour chaque segment de trajectoire (15_{AB}, 15_{BC}).

2. Procédé selon la revendication 1, **caractérisé en ce que** les distances réelles (25) sont calculées dans un système de coordonnées local (x_{AB} y_{AB} z_{AB}, x_{BC} y_{BC} z_{BC}) associé à la longue corde respective (24_{AB}, 24_{BC}).

3. Procédé selon la revendication 1 ou 2, **caractérisé en ce qu'**un vecteur horizontal et un vecteur vertical sont calculés pour les distances réelles (25).

4. Procédé selon l'une des revendications 1 à 3, **caractérisé en ce qu'**un tracé théorique (27) de la voie ferrée (5) est prédéfini, **en ce que** les distances réelles (25) sont comparées à des distances théorique (26) associées entre le tracé théorique (27) et la longue corde respective (24_{AB}, 24_{BC}) et **en ce que** des valeurs de correction (28) en sont déduites pour un traitement ultérieur de la voie ferrée.

5. Procédé selon la revendication 4, **caractérisé en ce que,** par rapport au point de référence respectif (A, B, C), une distance de consigne horizontale (_{HS}) et/ou une distance de consigne verticale (vs) de la voie (5) est prédéfinie et **en ce que** les valeurs de correction (28) sont comparées à une différence (29) entre la distance réelle (H, V) détectée et la distance théorique (Hs,Vs) associée.

6. Procédé selon l'une des revendications 1 à 5, **caractérisé en ce qu'**une trajectoire tridimensionnelle (15) respective est détectée pour un rail gauche (30) de la voie ferrée (5) et pour un rail droit (30) de la voie ferrée (5).

7. Procédé selon l'une des revendications 1 à 6, **caractérisé en ce que** des positions GNSS (20) du véhicule de mesure (1) sont détectées au moyen d'un dispositif de réception GNSS (18) et **en ce que** la position réelle détectée de la voie ferrée (5) est comparée aux positions GNSS (20).

8. Procédé selon l'une des revendications 1 à 7, **caractérisé en ce qu'**un horodateur est prédéfini au moyen du système de mesure inertielle (13) comme base de temps commune pour chaque donnée de mesure.

9. Procédé selon l'une quelconque des revendications 1 à 8, **caractérisé en ce que** les relations géométriques des dispositions du système de mesure inertielle (13) et du système de détection sans contact (8) ainsi que, le cas échéant, d'un dispositif de réception GNSS (18) sont déterminées au moyen d'une opération de calibrage.

10. Véhicule de mesure (1) avec un châssis de véhicule (2), qui peut être déplacé sur des dispositifs de roulement sur rails (4) sur une voie ferrée (5), un système de détection sans contact (8) pour la détection automatique de points de référence (A, B, C) en position latérale de la voie ferrée (5) ainsi qu'une unité de mesure inertielle (14) étant disposés sur le véhicule de mesure (1), **caractérisé en ce qu'**un système de mesure inertielle (13) comprenant l'unité de mesure inertielle (14) est disposé pour détecter une trajectoire tridimensionnelle (15) de la voie ferrée (5), **en ce que** le système de détection sans contact (8) et le système de mesure inertielle (13) sont couplés à une unité de calcul (22) et **en ce que** l'unité de calcul (22) est agencée pour diviser la trajectoire (15) en segments de trajectoire (15_{AB}, 15_{BC}) ayant chacun un point de début de segment associé à un premier point de référence (A, B) et un point de fin de segment associé à un deuxième point de référence (B, C), pour définir une longue corde virtuelle (24_{AB}, 24_{BC}) pour chaque segment de trajectoire (15_{AB}, 15_{BC}) par rapport aux points de référence (A, B, C) associés, et pour calculer des distances réelles (25) entre la trajectoire (15) et la longue corde (24_{AB}, 24_{BC}) respectivement définie pour chaque segment de trajectoire (15_{AB}, 15_{BC}).

11. Véhicule de mesure (1) selon la revendication 10, **caractérisé en ce que** le système de détection sans contact (8) comprend un système de caméra stéréo (9) pour enregistrer des paires d'images de l'environnement latéral de la voie ferrée (5) et un dispositif d'évaluation (10) pour détecter et déterminer la position des points de référence (A, B, C).

12. Véhicule de mesure (1) selon la revendication 10 ou 11, **caractérisé en ce qu'**un dispositif de réception GNSS (18) est relié au châssis du véhicule (2) et **en ce que** des dispositifs de mesure de position (12) sont disposés sur le châssis du véhicule (2) pour déterminer la position du châssis du véhicule (2) par rapport à la voie ferrée (5).
